# EUROPÄISCHE PATENTANMELDUNG

(11) **EP 3 846 412 A1**
(43) Veröffentlichungstag der Anmeldung: **07.07.2021**
(21) Anmeldenummer: 20150021.2
(22) Anmeldetag: 02.01.2020
(51) Int. Cl.: H04L 29/08, H04L 29/06, H04W 12/12

(54) **VERFAHREN ZUM WEITERLEITEN VON DATENPAKETEN**

(71) Anmelder: Siemens Aktiengesellschaft, 80333 München (DE)
(72) Erfinder: Falk, Rainer, 85586 Poing (DE); Fries, Steffen, 85598 Baldham (DE)

(57) **Zusammenfassung**

Verfahren zum Weiterleiten von Datenpaketen, die in einer Datenkommunikation zwischen einem Gerät (11) und einem Kommunikationspartner (10) ausgetauscht und von einer mit dem Gerät verbundenen Datenfiltervorrichtung (16) abhängig von mindestens einer Filterregel übermittelt werden, umfassend:
- Ermitteln (S1) einer Geräteidentifizierungskennung (DFP) anhand mindestens einer beobachteten statistischen Eigenschaft der Datenkommunikation des Geräts (11),
- Überprüfen (S2) der ermittelten Geräteidentifizierungskennung (DFP) des Gerätes (11) gegenüber mindestens einer Referenz-Geräteidentifizierungskennung (RFP), wobei ein negatives Prüfergebnis resultiert, wenn die ermittelte Geräteidentifizierungskennung (DFP) von der mindestens einen Referenz-Geräteidentifizierungskennung (RFP) abweicht,
- Aktivieren (S4) mindestens einer Ersatzfilterregel (EP) in der Datenfiltervorrichtung (10), wenn ein negatives Prüfergebnis vorliegt, und
- Weiterleiten (S5) der Datenpakete entsprechend der mindestens einen Ersatzfilterregel (EP) durch die Datenfiltervorrichtung (10).

## Beschreibung

Die Erfindung betrifft ein Verfahren, eine Datenfiltervorrichtung und eine Datenweiterleitungsanordnung zum Weiterleiten von Datenpaketen, die in einer Datenkommunikation zwischen einem Gerät und einem Kommunikationspartner ausgetauscht und von einer mit dem Gerät verbundenen Datenfiltervorrichtung, abhängig von mindestens einer Filterregel, übermittelt werden.

In Internet der Dinge und insbesondere in industriellen Automatisierungssystemen werden häufig Komponenten, wie beispielsweise Feldgeräte oder Steuergeräte, über ein Kommunikationsnetzwerk miteinander verbunden und tauschen beispielsweise Steuernachrichten oder Statusinformationen aus. Solche vernetzten Komponenten weisen nicht immer integrierte Sicherheitsfunktionalität auf. Dies ist insbesondere bei bereits installierten, älteren Komponenten der Fall. Da ein Aufrüsten solcher Komponenten mit einer integrierten Sicherheitsfunktionalität häufig schwierig und kostenintensiv ist, werden beispielsweise Firewalls oder VPN-Geräte als zusätzliche Schutzkomponenten verwendet, um die Datenübertragung von und zu einer vernetzten Komponente zu schützen. Es können auch Datendioden oder eine Einwegdatenübertragungsvorrichtung (One-Way-Gateway) verwendet werden.

Um die Sicherheit vor Manipulation in einem vernetzten System zu gewährleisten, muss jedoch auch die Integrität jeder einzelnen Komponenten geschützt und überwacht werden. Die Systemintegrität und auch die Integrität der einzelnen Komponenten kann insbesondere durch das Ausnutzen von Schwachstellen in der Firmware und/oder Software der Komponente gefährdet sein. So kann beispielsweise auf einem Gerät ohne integrierte Sicherheitsfunktionalität ein Angreifer leichter eine Schadsoftware installieren, die die Komponente wiederum dazu veranlasst, beispielsweise Schadsoftware auf Geräten innerhalb des Kommunikationsnetzes aufzuspielen.

Die Geräteintegrität kann insbesondere durch Sicherheitsmaßnahmen auf dem Gerät selbst geschützt werden. Solche Sicherheitsmaßnahmen sind beispielsweise ein gesichertes Starten mittels einem sogenannten Secure Boot Mechanismus, ein Patchen der Gerätesoftware mit Sicherheitsfunktionalitäten oder auch ein eingeschränktes Zulassen von implementierbaren bzw. ausführbaren Applikationen anhand einer Positivliste. Es ist des Weiteren ein sogenanntes Fingerprinting eines Gerätes bekannt, bei dem ein das Gerät charakterisierender und identifizierender, häufig als Fingerprint bezeichneter Kenner durch eine Analyse des Netzwerkverkehrs des Gerätes erstellt wird.

Es ist nun die Aufgabe der vorliegenden Erfindung Geräte, die in einem Kommunikationsnetz miteinander verbunden sind, besser gegenüber Manipulation durch unerlaubte Dritte sowie durch bereits manipulierte Geräte im Kommunikationsnetz zu schützen.

Die Aufgabe wird durch die in den unabhängigen Ansprüchen genannten Maßnahmen gelöst. In den Unteransprüchen sind vorteilhafte Weiterbildungen der Erfindung dargestellt.

Gemäß einem ersten Aspekt betrifft die Erfindung ein Verfahren zum Weiterleiten von Datenpaketen, die in einer Datenkommunikation zwischen einem Gerät und einem Kommunikationspartner ausgetauscht und von einer mit dem Gerät verbundenen Datenfiltervorrichtung abhängig von mindestens einer Filterregel, übermittelt werden, umfassend:
- Ermitteln einer Geräteidentifizierungskennung anhand mindestens einer beobachteten statistischen Eigenschaft der Datenkommunikation des Gerätes,
- Überprüfen der ermittelten Geräteidentifizierungskennung eines Gerätes gegenüber mindestens einer Referenz-Geräteidentifizierungskennung, wobei ein negatives Prüfergebnis resultiert, wenn die ermittelte Geräteidentifizierungskennung von der mindestens einen Referenz-Geräteidentifizierungskennung abweicht,

- Aktivieren mindestens einer Ersatzfilterfunktion in der Datenfiltervorrichtung, wenn ein negatives Prüfergebnis vorliegt, und
- Weiterleiten der Datenpakete entsprechend der mindestens einen Ersatzfilterregel durch die Datenfiltervorrichtung.

Dies hat den Vorteil, dass bei einem negativen Prüfergebnis das Gerät als manipuliert erachtet wird und somit nur noch eingeschränkt kommunizieren kann. Dadurch wird erschwert, dass ein erfolgreich angegriffenes Gerät Angriffe gegen weitere Kommunikationspartner innerhalb des Kommunikationsnetzes oder auch in einem Fremdennetzwerk durchführt und dadurch möglicherweise Kommunikationspartner unerlaubt modifiziert, d.h. manipuliert. Durch ein solches Verfahren können insbesondere Geräte ohne integrierte Sicherheitsfunktionen vor Manipulation geschützt werden, z.B. einer Veränderung von Konfigurationsdaten, Betriebsdaten oder ausgeführtem Programmcode (z.B. durch einen Return-Oriented-Programming-Angriff), durch Ausnutzen von Pufferüberläufen (Buffer Overflow).

Die Datenfiltervorrichtung ist dabei Prüf- und Weiterleitungskomponente innerhalb des Übertragungspfad der Datenkommunikation und bevorzugt direkt mit dem Gerät verbunden. Die Datenfiltervorrichtung empfängt Datenpakete vom Gerät und leitet die Datenpakete entsprechend der mindestens einen aktiven Filterregel an den Kommunikationspartner weiter. Entsprechend leitet die Datenfiltervorrichtung in der Gegenrichtung vom Kommunikationspartner empfangene Datenpakete entsprechend mindestens einer Filterregel an das Gerät weiter. Das Weiterleiten der Datenpakete entsprechend der mindestens einen Ersatzfilterregel kann auch ein Verwerfen der Datenpakete bzw. ein nicht-Weiterleiten sein. Der Kommunikationspartner und das Gerät können dabei in dem gleichen Kommunikationsnetzwerk oder in unterschiedlichen Kommunikationsnetzwerken angeordnet sein.

Eine Geräteidentifizierungskennung wird anhand von mindestens einer statistischen Eigenschaft der vom Gerät gesendeten und/oder empfangenen Datenpakete der Datenkommunikation ermittelt. Diese mindestens eine Eigenschaft wird innerhalb eines vorgegebenen Zeitraums detektiert und statistisch ausgewertet. Die beobachteten Eigenschaften sind dabei insbesondere physikalische Eigenschaften der Datenpakete oder Eigenschaften des Gerätes, die sich bei einer Datenübertragung in Übertragungseigenschaften der Datenpakete widerspiegeln. So kann beispielsweise eine Schwankung (Jitter) und Verschiebung im Zeitverhalten sein, z.B. der Symbolübertragung.Dies kann auch als ein Device-Fingerprinting bezeichnet werden. Speziell kann z.B. bei einer nominellen Datenübertragungsrate von 100 Mbit/sec (z.B. bei Ethernet mit 100BASE-T2 Übertragungsverfahren) die tatsächliche Symbolübertragungsrate von nominell 25 Msymbolen/s erfasst werden, sowie die Spannungspegel, Länge der Pulse entsprechend des verwendeten Modulationsverfahrens ausgewertet werden. Auch kann die Steilheit der Pulsflanken erfasst werden. Durch Toleranzen der verwendeten Bauteile (z.B. zur Takterzeugung und Spannungserzeugung) weisen unterschiedliche physikalische Realisierungen leicht unterschiedliche statistische Eigenschaften auf. Die beobachteten Eigenschaften können jedoch auch von der verwendeten Firmware des Geräts abhängen, z.B. der Implementierung des Protokollstacks oder des Betriebssystems, z.B. eine dynamische Anpassung von Datenpaketlängen nach einem Verbindungsaufbau oder von Wartezeiten für eine Paketwiederholung bei Übertragungsfehlern.

In einer vorteilhaften Ausführungsform wird die Geräteidentifizierungskennung anhand mindestens einem beobachteten zeitlichen Verlauf mindestens eines physikalischen Parameters des Geräts ermittelt.

Der zeitliche Verlauf mindestens eines physikalischen Parameters liefert Information zu ausgeführten Prozessen im Gerät und auch einer Konfiguration des Gerätes. So können beispielsweise ungewöhnliche Prozessabfolgen oder unübliche Aktivitäten innerhalb eines Prozesses erkannt werden. Der zeitliche Verlauf von mindestens einem physikalischen Parameter kann zusätzlich zur beobachteten statistischen Eigenschaft der Datenkommunikation oder auch als alleinige Quelle zur Ermittlung der Geräteidentifizierungskennung verwendet werden.

In einer vorteilhaften Ausführungsform wird die Geräteidentifizierungskennung in der Datenfiltervorrichtung ermittelt.

Somit kann ohne eine Modifizierung des Gerätes selbst mit einem Integritätsschutz für das Gerät bereitgestellt werden. Dies ist besonders kosteneffizient, da nicht jedes Gerät selbst modifiziert werden muss, sondern der Schutz für die an die Datenfiltervorrichtung angebundenen Geräte gebündelt in der Datenfiltervorrichtung durchgeführt werden kann.

In einer vorteilhaften Ausführungsform wird die Geräteidentifizierungskennung im Gerät selbst oder in einer separaten, mit dem Gerät verbundenen Geräteidentifizierungskennungs-Ermittlungsvorrichtung ermittelt und an die Datenfiltervorrichtung übermittelt.

Somit kann eine im Gerät selbst erstellte Geräteidentifizierungskennung zur Auswahl der zur aktivierenden Filterregel genutzt werden. Insbesondere können Geräte, für die die Geräteidentifizierungskennung nicht von der Datenfiltervorrichtung ermittelt werden kann, dennoch in der Datenfiltervorrichtung behandelt werden. Im Gerät sind insbesondere weitere Parameter und Eigenschaften detektierbar, sodass zusätzliche beobachtete Eigenschaften der Datenkommunikation bei der Ermittlung der Geräteidentifizierungskennung berücksichtigt werden können. In einer separaten, mit dem Gerät verbundenen Geräteidentifizierungskennungs-Ermittlungsvorrichtung sind Störungen der beobachteten statistischen Eigenschaften der Datenkommunikation reduziert vorhanden und ermöglichen somit eine verbesserte Genauigkeit der ermittelten Geräteidentifizierungskennung. Beispielsweise sind dabei durch die Übertragungsleitungen verursachte Störungen der Datenkommunikation verringert.

In einer vorteilhaften Ausführungsform wird die Geräteidentifizierungskennung auf Anforderung, automatisch in vorgegebenen Zeitabständen oder kontinuierlich im laufenden Betrieb oder bei einem Verbindungsaufbau, ermittelt.

Damit kann die Geräteidentifizierungskennung flexibel, je nach Art und Sicherheitsbedarf des Gerätes, ermittelt werden und somit die Last in der Gerätefiltervorrichtung optimiert werden.

In einer vorteilhaften Ausführungsform wird ein Zurücksetzen von der Ersatzfilterregel zu einer Basisfilterregel, abhängig von einem mechanischen Signal, einem elektronischen Signal, bevorzugt einer Steuerungsnachricht oder automatisch in vorgegebenen zeitlichen Abständen ausgeführt.

Somit kann die Dauer einer Filterung entsprechend der Ersatzfilterregel durch ein mechanisches Signal, beispielsweise manuell durch Tastendruck, zurückgesetzt werden bzw. automatisch oder einem durch das Ereignis ausgelösten elektronischen Signal, zurückgesetzt werden. Durch ein automatisches Zurücksetzen in vorgegebenen zeitlichen Abständen kann eine Filterung mit der Basisfilterregel als bevorzugte Filterregel durchgesetzt werden.

In einer vorteilhaften Ausführungsform wird ein Zurücksetzen von der mindestens einen Ersatzfilterregel zu mindestens einer Basisfilterregel dann ausgeführt, wenn eine erneut ermittelte Geräteidentifizierungskennung mit der Referenz-Geräteidentifizierungskennung übereinstimmt.

Somit wird sichergestellt, dass lediglich dann auf die Basisfilterregel zurückgesetzt wird, wenn das Gerät wieder einen integren Zustand eingenommen hat.

In einer vorteilhaften Ausführungsform wird jeweils mindestens eine Geräteidentifizierungskennung für jedes für die Datenkommunikation vom Gerät verwendete Datenübertragungsprotokolle und/oder für jede Portnummer und/oder für jede MAC/IP-Adresse und/oder für jedes zur Authentisierung verwendetes Zertifikat des Gerätes ermittelt.

Dies hat den Vorteil, dass Filterregeln abhängig von den Übertragungsarten bzw. Dienste unterschiedlich eingestellt werden können. Durch eine Geräteidentifizierungskennung für jedes zur Authentifizierung verwendete Zertifikat kann eine Manipulation des Zertifikates identifiziert werden. Bei einer MAC-Adresse handelt es sich um eine Adresse des Gerätes auf Übertragungsschichtebene, beispielsweise entsprechend einem Medienzugangssteuerung, kurz auch MAC genannt. Bei einer IP-Adresse handelt es sich um eine Adresse des Gerätes auf Vermittlungsebene, hier beispielsweise entsprechend dem Internetprotokoll.

In einer vorteilhaften Ausführungsform ist der physikalische Parameter ein Stromverbrauch oder eine elektromagnetische Abstrahlung des Gerätes.

Somit kann die Geräteidentifizierungskennung anhand des Stromverbrauches bzw. der elektromagnetischen Abstrahlung ermittelt werden. Stromverbrauch und elektromagnetische Abstrahlung erlauben einen Rückschluss auf die Verwendung von einzelnen Gerätekomponenten, wie beispielsweise eine Belastung des Zentralprozessors, interne Datenübertragungen zwischen verschiedenen Speichereinheiten oder zu einem Prozessor oder einem anderen elektronischen Bauelement, das Softwarecodes ausführt. Durch den Stromverbrauch können unterschiedliche Konfigurationen des Geräts oder auch Firmware-Versionen der im Gerät enthaltenen Komponenten identifiziert werden.

In einer vorteilhaften Ausführungsform wird die Geräteidentifizierungskennung abhängig von einem Eingabe- und Ausgabeverhalten von mindestens einem mit dem Gerät verbundenen Sensoren ermittelt.

Dadurch kann eine Manipulation des Gerätes, die sich durch ein unübliches Ein- und Ausgabeverhalten ausdrückt, ebenfalls erkannt werden.

In einer vorteilhaften Ausführungsform wird das Überprüfen durch einen Ähnlichkeitsvergleich der ermittelten Geräteidentifizierungskennung gegenüber mindestens einer Referenz-Geräteidentifizierungskennung durchgeführt.

Dazu können prinzipiell beliebige Vergleichsalgorithmen, wie beispielsweise ein Vergleich gegenüber einem Schwellwert, eine Hauptkomponentenanalyse, im Fachjargon auch als Principal Component Analysis bezeichnet, eine Supportvektormaschine oder ein neuronales Netzwerk verwendet werden.

In einer vorteilhaften Ausführungsform wird eine Kommunikationspartner-Identifizierungskennung des Kommunikationspartners ermittelt, die Kommunikationspartner-Identifizierungskennung gegenüber einer Referenz-Kommunikationspartner-Identifizierungskennung überprüft und die Ersatzfilterregel zusätzlich, abhängig von dem Prüfergebnis der Kommunikationspartner-Identifizierungskennung, aktiviert.

Dadurch kann die Integrität des Kommunikationspartners bei der Wahl der Filterregel in der Datenweiterleitungsvorrichtung berücksichtigt werden. Beispielsweise kann das Gerät vor manipulierten anderen Kommunikationspartnern geschützt werden. Diese Kommunikationspartner können entweder Geräte sein, die mit dem gleichen Kommunikationsnetzwerk verbunden sind, oder Kommunikationspartner sein, die mit einem anderen Kommunikationsnetzwerk verbunden sind. Zusätzlich kann darüber festgestellt werden, ob eine Kommunikation mit bisher nicht kontaktierten Kommunikationspartnern durchgeführt wird.

In einer vorteilhaften Ausführungsform wird die Geräteidentifizierungskennung und/oder die Kommunikationspartner-Identifizierungskennung von der Datenfiltervorrichtung an einen Server gesendet und das vom Server durch das Prüfen der Geräteidentifizierungskennung ermittelte Prüfergebnis in der Datenfiltervorrichtung empfangen.

Die Datenfiltervorrichtung kann beispielsweise die ermittelte Identifizierungskennung an einen Authentifizierungsserver oder an einen Cloud-Backend-Server oder einen Edge-Cloud-Server zur Analyse übermitteln.

Ein solcher Cloud-Backend-Server oder Edge-Cloud-Server führt das Überprüfen der ermittelten Identifizierungskennung gegenüber der Referenz-Identifizierungskennung des Gerätes oder auch des Kommunikationspartners durch. Das Prüfergebnis, das zu einem Aktivieren einer Ersatzfilterregel führt, kann in diesem Fall nicht nur durch die Datenfiltervorrichtung selbst getroffen werden, sondern kann dieser mitgeteilt werden. Dies ist insbesondere bei verteilten Anlagen oder baugleichen Anlagen bzw. deren Kommunikationsnetzen sinnvoll, um durch die frühzeitige Erkennung einer Abweichung auch andere Anlagenteile bzw. Teilkommunikationsnetze auf eine Ersatzfilterregel umstellen zu können.

Ein zweiter Aspekt der Erfindung betrifft eine Datenfiltervorrichtung zum Weiterleiten von Datenpaketen, die in einer Datenkommunikation zwischen einem Gerät und einem Kommunikationspartner ausgetauscht und von der mit dem Gerät verbundenen Datenfiltervorrichtung, abhängig von mindestens einer Filterregel, weitergeleitet werden, umfassend
- eine Ermittlungseinheit, die derart ausgebildet ist, eine Geräteidentifizierungskennung anhand mindestens einer beobachteten statistischen Eigenschaft der Datenkommunikation des Gerätes zu ermitteln,
- eine Prüfeinheit, die derart ausgebildet ist, die mindestens eine ermittelte Geräteidentifizierungskennung des Gerätes gegenüber mindestens einer Referenz-Geräteidentifizierungskennung zu überprüfen, wobei ein negatives Prüfergebnis resultiert, wenn die ermittelte Geräteidentifizierungskennung von der mindestens eine Referenz-Geräteidentifizierungskennung abweicht,
- eine Aktivierungseinheit, die derart ausgebildet ist, mindestens eine Ersatzfilterregel in der Datenfiltervorrichtung zu aktivieren, wenn ein negatives Prüfergebnis vorliegt, und
- eine Weiterleitungseinheit, die derart ausgebildet ist, die Datenpakete entsprechend der mindestens einen Ersatzfilterregel weiterzuleiten.

Ein dritter Aspekt der Erfindung betrifft eine Datenweiterleitungsanordnung zum Weiterleiten von Datenpaketen, die in einer Datenkommunikation zwischen einem Gerät und einer mit dem Gerät verbundenen Datenfiltervorrichtung, abhängig von mindestens einer Filterregel, übermittelt werden, umfassend eine Datenfiltervorrichtung gemäß der vorherigen Beschreibung und einen Server, der derart ausgebildet ist, die Geräteidentifizierungskennung und/oder die Kommunikationspartneridentifizierungskennung von der Datenfiltervorrichtung zu empfangen, die Geräteidentifizierungskennung zu prüfen und das ermittelte Prüfergebnis an die Datenfiltervorrichtung zu senden.

Ein vierter Aspekt der Erfindung betrifft eine Computerprogrammprodukt, umfassend eine nichtflüchtiges Speichermedium, das direkt in einen Speicher eines digitalen Computers ladbar ist, umfassen Programmcodeteile, die dazu geeignet sind, die beschriebenen Schritte des Verfahrens durchzuführen.

Sofern es in der nachfolgenden Beschreibung nicht anders angegeben ist, beziehen sich die Begriffe "ermitteln", "überprüfen", "aktivieren" und "weiterleiten" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden und vorliegen können. Insbesondere sollte der Ausdruck "Computer" möglichst weit ausgelegt werden, um insbesondere alle elektronischen Geräte mit Datenverarbeitungseigenschaften abzudecken.

Eine jeweilige "Einheit", z. B. die "Ermittlungseinheit", "Prüfeinheit", "Aktivierungseinheit" und "Weiterleitungseinheit" kann hardwaretechnisch und/oder auch softwaretechnisch implementiert sein. Bei einer hardwaretechnischen Implementierung kann die jeweilige Einheit als Vorrichtung oder als Teil einer Vorrichtung, z. B. als Computer oder als Mikroprozessor, ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ausführungsbeispiele des erfindungsgemäßen Verfahrens bzw. der erfindungsgemäßen Vorrichtungen sind in den Zeichnungen beispielhaft dargestellt und werden anhand der nachfolgenden Beschreibung näher erläutert. Es zeigen:
- Fig. 1: ein Anwendungsszenario, umfassend ein Ausführungsbeispiel der erfindungsgemäßen Datenfiltervorrichtung bzw. Datenweiterleitungsanordnung in Blockdarstellung;
- Fig. 2: ein Ausführungsbeispiel des erfindungsgemäßen Verfahrens in Form eines Ablaufdiagramms;
- Fig. 3: ein Ausführungsbeispiel der erfindungsgemäßen Datenfiltervorrichtung in Blockdarstellung; und
- Fig. 4: ein Ausführungsbeispiel der erfindungsgemäßen Datenweiterleitungsanordnung mit einer dem Gerät vorgeschalteten Geräteidentifizierungskennungs-Ermittlungsvorrichtung in Blockdarstellung.

Einander entsprechende Teile sind in allen Figuren mit den gleichen Bezugszeichen versehen.

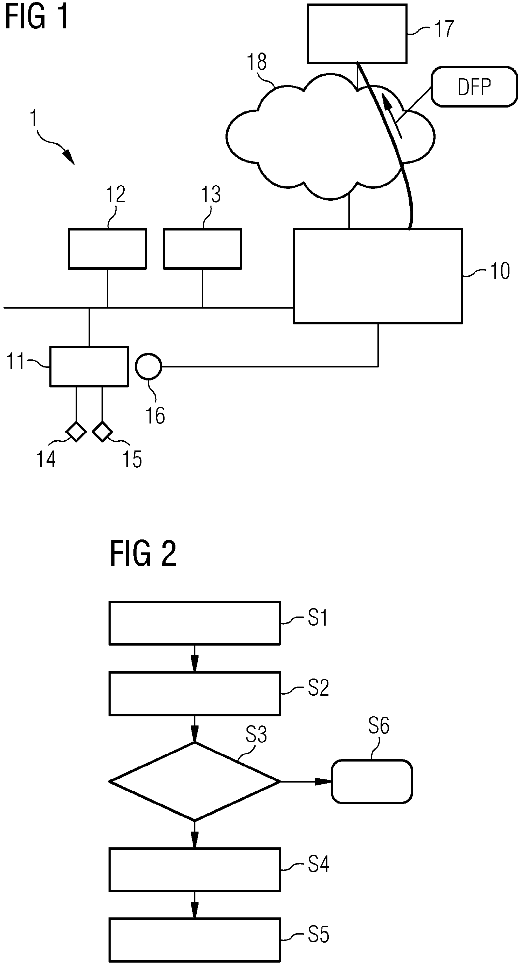

Figur 1 zeigt ein Kommunikationsnetzwerk 1, beispielsweise einer Automatisierungsanlage. In dem Kommunikationsnetzwerk 1 ist eine Datenfiltervorrichtung 10 dargestellt, die über das Kommunikationsnetzwerk 1 mit Geräten 11, 12 und 13 verbunden ist. Die Geräte 11, 12 und 13 sind beispielsweise Feldgeräte oder auch Steuergeräte oder sonstige Komponenten der Automationsanlage. Das Gerät 11 umfasst des Weiteren Sensoren 14, 15, die mit dem Gerät 11 verbunden sind. Die Datenfiltervorrichtung 10 ermittelt jeweils eine Geräteidentifizierungskennung der Geräte 11, 12 und 13. Die Geräteidentifizierungskennung, auch als Gerätefingerabdruck bezeichnet, ermöglicht eine Identifizierung des jeweiligen Gerätes und ist bevorzugt anhand mindestens einer beobachteten statistischen Eigenschaft der Datenkommunikation des jeweiligen Gerätes 11, 12, 13 ermittelt. Bei Gerät 11 wird außerdem über einen Überwachungssensor 16, der mit der Datenfiltervorrichtung verbunden ist, mindestens ein zeitlicher Verlauf von mindestens einem physikalischen Parameter des Gerätes detektiert und zur Ermittlung der Geräteidentifizierungskennung DFP verwendet.

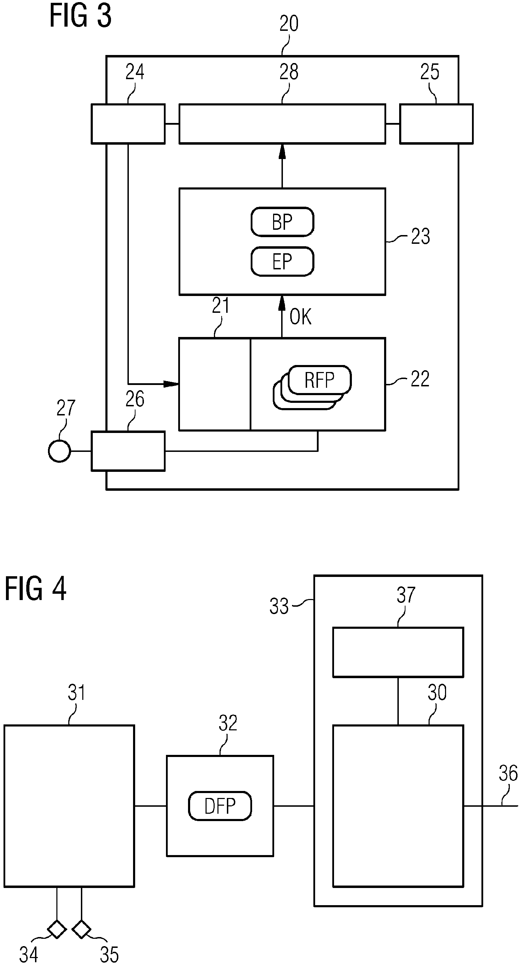

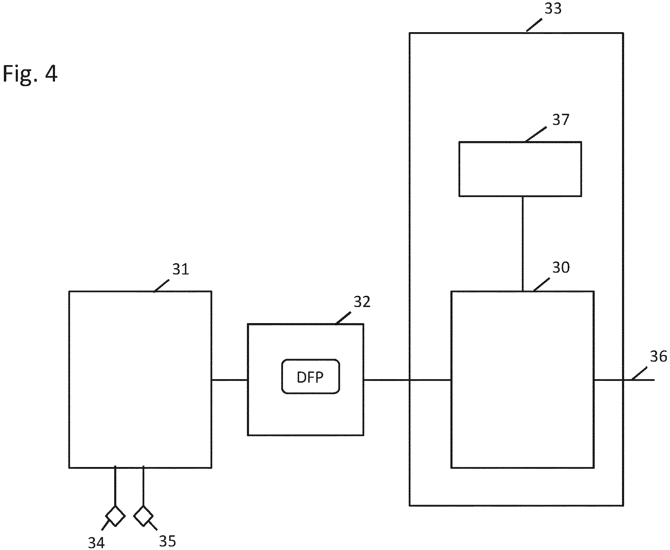

Die Geräteidentifizierungskennung DFP wird in der Datenfiltervorrichtung 10 ermittelt. Alternativ kann die Geräteidentifizierungskennung DFP auch im Gerät 11, 12, 13 selbst oder in einer separat mit dem Gerät 11, 12, 13 verbundenen Geräteidentifizierungs-Ermittlungsvorrichtung, siehe Figur 4, ermittelt und an die Datenfiltervorrichtung 10 übermittelt werden.

Allgemein werden von den Geräten 11, 12, 13 Datenpakete über eine Datenkommunikation, die anhand eines Datenübertragungsprotokolls aufgebaut und gesteuert wird, mit einem Kommunikationspartner ausgetauscht. Eine Datenkommunikation kann auch zu einem Kommunikationspartner, der nicht mit dem Automatisierungsnetz selbst, sondern über ein beispielsweise öffentliches Kommunikationsnetzwerk 18 verbunden ist, ausgetauscht werden. Die Datenfiltervorrichtung 10 empfängt dabei die Datenpakete, beispielsweise vom Gerät 11, und leitet die Datenpakete entsprechend einer in der Datenfiltervorrichtung 10 aktivierten Filterregel an den gewünschten Kommunikationspartner weiter.

Anhand von Figur 2 wird nun das erfindungsgemäße Verfahren genauer beschrieben.

In einem ersten Verfahrensschritt S1 wird eine Geräteidentifizierungskennung DFP anhand mindestens einer beobachteten statistischen Eigenschaft der Datenkommunikation des Gerätes 11 ermittelt. Anschließend, im Verfahrensschritt S2, wird die ermittelte Geräteidentifizierungskennung DFP gegenüber mindestens einer Referenz-Geräteidentifizierungskennung RFP überprüft. Ein negatives Prüfergebnis ergibt sich, wenn die ermittelte Geräteidentifizierungskennung DFP von der mindestens einen Referenz-Geräteidentifizierungskennung RFP abweicht. Es wird im Verfahrensschritt S4 mindestens eine Ersatzfilterregel EP in der Datenfiltervorrichtung 10 aktiviert, wenn ein negatives Prüfergebnis vorliegt.

Die Überprüfung, ob ein positives oder ein negatives Ergebnis vorliegt, ist im Ablaufdiagramm durch den Schritt S3 separat dargestellt und gekennzeichnet. Im Verfahrensschritt S5 werden die Datenpakete entsprechend der mindestens einen Ersatzfilterregel EP von der Datenfiltervorrichtung weitergeleitet. Wird beim Überprüfen der ermittelten Geräteidentifizierungskennung (DFP) ein positives Prüfergebnis ermittelt, d. h., stimmt die ermittelte Geräteidentifizierungskennung DFP mit der Referenz-Geräteidentifizierungskennung RFP überein, so bleibt die reguläre Filterregel, im Weiteren als Basisfilterregel bezeichnet, aktiv, siehe Verfahrensschritt S6.

Die Geräteidentifizierungskennung DFP kann entweder in der Datenfiltervorrichtung 10 selbst oder auch im Gerät 11 bzw. einer dem Gerät 11 vorgeschalteten Geräteidentifizierungs-Erkennungsvorrichtung 34, siehe Figur 4, ermittelt werden. Die Geräteidentifizierungskennung DFP ist bevorzugt anhand von statistischen Eigenschaften der Datenkommunikation, die das Gerät 11 als Sender aussendet oder als Empfänger von Datenpaketen empfängt, ermittelt. Beobachtete Eigenschaften sind dabei beispielsweise eine Paketlänge oder auch Zeitinformation zu Datenpaketen des Gerätes 11. Daraus abgeleitete statistische Eigenschaften sind beispielsweise ein Mittelwert oder eine Varianz der Paketlänge oder auch Verzögerungen bzw. Jitter eines Taktgebers des Gerätes. Ebenso können z.B. Signalpegel von Symbolen der Datenübertragung erfasst werden, z.B. bei einem Modulationsverfahren. Die Werte dieser statistischen Eigenschaften sind in der Geräteidentifizierungskennung DFP enthalten.

Die Datenidentifizierungskennung DFP kann jeweils für ein gesamtes Gerät erstellt bzw. ermittelt werden. Es können aber auch spezifisch für jedes Datenübertragungsprotokoll, beispielsweise für ein Transferkontrollprotokoll TCP, für ein Nutzer-Datenprotokoll UDP und für andere Datenprotokolle ermittelt werden. Es kann auch jeweils mindestens eine Geräteidentifizierungskennung DFP für jede genutzte Portnummer des Gerätes und/oder für jede MAC/IP-Adresse des Gerätes ermittelt werden. Somit kann das Kommunikationsverhalten das Gerät 11 bezüglich der Datenkommunikation über die unterschiedlichen Datenübertragungsprotokolle und auch die für Datenübertragungsprotokolle/-dienste spezifischen Portnummern und Transportschicht oder auch Übertragungsschicht spezifischen MAC/IP-Adressen des Gerätes 11 unterschieden werden. Des Weiteren kann eine eigene Geräteidentifizierungskennung DFP für diejenigen Datenkommunikation des Gerätes ermittelt werden, die ein bestimmtes Zertifikat zur Authentifizierung verwenden.

Zusätzlich kann eine Kommunikationspartner-Geräteidentifizierungskennung für einen oder mehrere oder auch alle Kommunikationspartner des Gerätes 11 ermittelt werden und gegenüber einer Referenz-Kommunikationspartner-Geräteidentifizierungskennung überprüft werden. Das Ermitteln der Kommunikationspartner-Geräteidentifizierungskennung kann auf Anforderung, periodisch oder kontinuierlich im laufenden Betrieb oder bei einem Verbindungsaufbau erfolgen. Dadurch kann die Datenkommunikation des Gerät 11 zu einem manipulierten Kommunikationspartnern durch das Aktivieren der mindestens einen Ersatzfilterregel beschränkt oder ganz unterbunden werden.

Des Weiteren kann die Datenfiltervorrichtung 10 die ermittelte Geräteidentifizierungskennung DFP oder auch die Kommunikationspartner-Identifizierungskennung an einen Server, beispielsweise einen Authentifizierungsserver oder an einen zentral oder dezentral angeordneten Server zur Analyse und zum Vergleich übermittelt werden. Somit kann das Prüfergebnis nicht nur durch die Datenfiltervorrichtung 10 selbst ermittelt werden, sondern der Datenfiltervorrichtung 10 auch von dem Server mitgeteilt werden. Dies ist insbesondere segmentiert strukturierten Anlagen oder baugleichen Anlagen bzw. Kommunikationsnetzen sinnvoll, um durch eine frühzeitige Erkennung einer Abweichung auch andere Anlagenteile frühzeitig auf eine neue Ersatzfilterregel umstellen zu können. Im Server kann die Referenz-Geräteidentifizierungskennung DFP bzw. Referenz-Kommunikationspartner-Identifizierungskennung aktualisiert und oder abhängig von Prüfergebnissen anderer Geräteidentifizierungskennungen angepasst werden. Dies vermindert den Aufwand zur Aktualisierung der Referenz-Geräte- bzw. Referenz-Kommunikationspartneridentifizierungskennungen in den einzelnen Geräten bzw. Kommunikationspartnern.

Die Geräteidentifizierungskennung DFP kann auf Anforderung, automatisch in vorgegebenen Zeitabständen oder kontinuierlich im laufenden Betrieb oder bei einem Verbindungsaufbau ermittelt werden.

Das Überprüfen kann durch einen Ähnlichkeitsvergleich der ermittelten Geräteidentifizierungskennung DFP gegenüber mindestens einer Referenz-Geräteidentifizierungskennung durchgeführt werden. Dazu können prinzipiell beliebige Vergleichsalgorithmen verwendet werden. Beispiele für einen Ähnlichkeitsvergleich sind ein Vergleich gegenüber einem Schwellwert, eine Hauptkomponentenanalyse oder einen Vergleich über eine Supportvektormaschine oder ein neuronales Netzwerk sein. In allen Fällen wird die Ähnlichkeit der Geräteidentifizierungskennung mit der Referenz-Geräteidentifizierungskennung ermittelt bzw. die Geräteidentifizierungskennung einer Klasse zugeordnet, die mindestens einer der Referenz-Geräteidentifizierungskennung entspricht bzw. außerhalb dieser Klassen liegt.

Beim Vorliegen eines negativen Prüfergebnisses kann die mindestens eine Ersatzfilterregel durch ein mechanisches Signal, beispielsweise einen Tastendruck, oder auch durch ein elektronisches Signal, beispielsweise durch ein Steuerkommando, oder auch automatisch zeitgesteuert zurückgesetzt werden, sodass wieder die ursprüngliche Basisfilterregel BP aktiviert wird. Die Zurücksetzung, d. h. der Wechsel von der Ersatzfilterregel EP zur Basisfilterregel BP kann auch dann erfolgen, wenn bei einem erneuten Ermitteln und Prüfen der Geräteidentifizierungskennung DFP wieder eine Übereinstimmung mit der Referenz-Geräteidentifizierungskennung festgestellt wird.

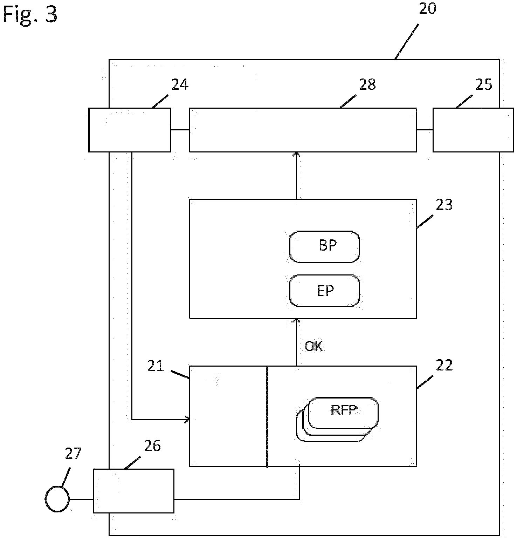

Figur 3 zeigt den Aufbau einer Datenfiltervorrichtung. Die Datenfiltervorrichtung 20 umfasst eine erste Netzwerkschnittstelle 24, die mit dem Gerät, beispielsweise Gerät 11 aus Figur 1, verbunden ist. Bevorzugt ist das Gerät 11 direkt, d.h. ohne weitere Zwischenkomponenten, mit der Datenfiltervorrichtung 20 verbunden, um die statistischen Eigenschaften der Datenkommunikation des Gerätes 11 unverfälscht in der Datenfiltervorrichtung 20 ermitteln zu können. Wird die Geräteidentifizierungskennung DFP im Gerät 11 selbst ermittelt, so kann diese die Geräteidentifizierungskennung DFP beispielsweise über eine Datenkommunikationsprotokollnachricht oder als Zusatz zu einem Datenpaket an die Datenfiltervorrichtung 20 übermittelt und dort ermittelt werden. In diesem Fall können weitere Komponenten zwischen der Datenfiltervorrichtung 20 und dem Gerät 11 enthalten sein.

Mit einer zweiten Netzwerkschnittstelle 25 ist der Kommunikationspartner verbunden. Der Kommunikationspartner kann ebenfalls entweder direkt mit der zweite Netzwerkschnittstelle 25 oder über weitere Netzwerkkomponenten mit der Datenfiltervorrichtung 20 verbunden sein. Die Datenpakete einer Datenkommunikation zwischen der ersten und der zweiten Netzwerkschnittstelle 24, 25 wird durch eine Weiterleitungseinheit 28 gefiltert. Nur Datenpakete, die der aktivierten Filterregel entsprechen, werden weitergeleitet. Eine Ersatzfilterregel EP kann dabei die Filterregel umfassen, keine Datenpakete weiterzuleiten.

Die Datenfiltervorrichtung 20 umfasst des Weiteren eine Ermittlungseinheit 21, die mit der ersten Netzwerkschnittstelle 24 verbunden ist und die Geräteidentifizierungskennung DFP entweder selbst ermittelt oder eine in den Datenpaketen bzw. der Datenkommunikation enthaltene Geräteidentifizierungskennung DFP aus dem Datenstrom der Datenpakete ermittelt. Die Datenfiltervorrichtung 20 umfasst des Weiteren eine Prüfeinheit 22, die hier als kombinierte Einheit, zusammen mit der Ermittlungseinheit, ausgebildet ist. Die Prüfeinheit kann aber auch als eigenständige Prüfeinheit ausgebildet sein, die die Geräteidentifizierungskennung DFP von der Ermittlungseinheit empfängt.

Die Prüfeinheit 22 enthält die mindestens eine Referenz-Geräteidentifizierungskennung RFP bzw. Referenz-Kommunikationspartner-Identifizierungskennung. In der Prüfeinheit 22 wird die aktuelle Geräteidentifizierungskennung DFP mit der Referenz-Identifizierungskennung RFP überprüft und ein Prüfungsergebnis ermittelt. Weichen die beiden Kennungen voneinander ab, so wird ein negatives Prüfergebnis ermittelt. Die Aktivierungseinheit 23 aktiviert entsprechend dem Prüfergebnis die Basis- oder Ersatzfilterregel BP, EP, die in der Weiterleitungseinheit 28 auf die Datenpakete angewendet wird. Die Aktivierungseinheit 23 weist im dargestellten Beispiel zwei Filterregeln, eine Basisfilterregel BP und eine Ersatzfilterregel EP auf. Die Datenpakete über die zweite Netzwerkschnittstelle 25 zum Kommunikationspartner hin ausgegeben.

Die Prüfeinheit 22 ist des Weiteren mit einer Sensorschnittstelle 26 verbunden, an die mindestens ein Sensor zum Ermitteln mindestens eines physikalischen Parameters des Gerätes 11 verbunden ist. Diese physikalischen Parameter werden in der Ermittlungseinheit 21 analysiert und der Prüfeinheit 22 bereitgestellt.

Figur 4 zeigt eine Variante einer Datenweiterleitungsanordnung 33 zum Weiterleiten von Datenpaketen, die eine Datenfiltervorrichtung 30 sowie einen Server 37 umfasst, die miteinander verbunden sind. Der Server 37 ist dabei derart ausgebildet, die Geräteidentifizierungskennung DFP und/oder die Kommunikationspartner-Identifizierungskennung von der Datenfiltervorrichtung 30 zu empfangen, zu prüfen und das Prüfergebnis an die Datenfiltervorrichtung 30 zu senden. Im dargestellten Beispiel ist die Datenfiltervorrichtung 30 ist mit einer Geräte-Identifizierungskennungs-Ermittlungsvorrichtung 32 verbunden, das wiederum mit dem Gerät 11 verbunden ist.

Das Gerät 31 weist zwei Überwachungssensoren 34, 35 auf, die mit dem Gerät 31 verbunden sind. Die Geräteidentifizierungskennungs-Ermittlungsvorrichtung 32 erstellt die Geräteidentifizierungskennung DFP anhand der vom Gerät 31 ausgeführten Datenkommunikation. Dabei kann auch ein Ein-/Ausgabeverhalten der Überwachungssensoren 34, 35 zur Erstellung der Geräteidentifizierungskennung DFP verwendet werden. Die Geräteidentifizierungskennungs-Ermittlungsvorrichtung 32 übermittelt die Geräteidentifizierungskennung DFP an die Datenfiltervorrichtung 30.

Durch das beschriebene Verfahren sowie die Datenfiltervorrichtung kann ein manipuliertes Gerät erkannt und nur noch eingeschränkt kommunizieren. Dadurch wird das Kommunikationsnetz und die Kommunikationspartner vor einer Manipulation durch das manipulierte Gerät geschützt. Dieser Schutz kann einfach für bestehende Geräte in einem Kommunikationsnetzwerk nachgerüstet werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum Weiterleiten von Datenpaketen, die in einer Datenkommunikation zwischen einem Gerät (11) und einem Kommunikationspartner (10) ausgetauscht und von einer mit dem Gerät verbundenen Datenfiltervorrichtung (16) abhängig von mindestens einer Filterregel übermittelt werden, umfassend:
- Ermitteln (S1) einer Geräteidentifizierungskennung (DFP) anhand mindestens einer beobachteten statistischen Eigenschaft der Datenkommunikation des Geräts (11),
- Überprüfen (S2) der ermittelten Geräteidentifizierungskennung (DFP) des Gerätes (11) gegenüber mindestens einer Referenz-Geräteidentifizierungskennung (RFP), wobei ein negatives Prüfergebnis resultiert, wenn die ermittelte Geräteidentifizierungskennung (DFP) von der mindestens einen Referenz-Geräteidentifizierungskennung (RFP) abweicht,
- Aktivieren (S4) mindestens einer Ersatzfilterregel (EP) in der Datenfiltervorrichtung (10), wenn ein negatives Prüfergebnis vorliegt, und
- Weiterleiten (S5) der Datenpakete entsprechend der mindestens einen Ersatzfilterregel (EP) durch die Datenfiltervorrichtung (10).

2. Verfahren nach Anspruch 1, wobei die Geräteidentifizierungskennung (DFP) anhand mindestens einem beobachteten zeitlichen Verlauf mindestens eines physikalischen Parameters des Geräts ermittelt wird.

3. Verfahren nach Anspruch 1 oder 2, wobei die Geräteidentifizierungskennung (DFP) in der Datenfiltervorrichtung (10) ermittelt wird.

4. Verfahren nach Anspruch 1 oder 2, wobei die Geräteidentifizierungskennung (DFP) im Gerät (11) selbst oder in einer separaten mit dem Gerät (31) verbundenen Geräteidentifizierungskennungs-Ermittlungsvorrichtung (32) ermittelt und an die Datenfiltervorrichtung (30) übermittelt wird.

5. Verfahren nach einem der vorangehenden Ansprüche, wobei die Geräteidentifizierungskennung (DFP) auf Anforderung, automatisch in vorgegebenen Zeitabständen oder kontinuierlich im laufenden Betrieb oder bei einem Verbindungsaufbau ermittelt wird.

6. Verfahren nach einem der vorangehenden Ansprüche, wobei ein Zurücksetzen von der mindestens einen Ersatzfilterregel (EP) zu mindestens einer Basisfilterregel (BP) abhängig von einem mechanischen Signal, einem elektronischen Signal, bevorzugt einer Steuerungsnachricht, oder automatisch in vorgegebenen zeitlichen Abständen ausgeführt wird.

7. Verfahren nach einem der Ansprüche 1 bis 5, wobei ein Zurücksetzen von der mindestens einen Ersatzfilterregel (EP) zur mindestens einen Basisfilterregel (BP) dann ausgeführt wird, wenn eine erneut ermittelte Geräteidentifizierungskennung (DFP) mit der Referenz-Geräteidentifizierungskennung (RFP) übereinstimmt.

8. Verfahren nach einem der vorhergehenden Ansprüche, wobei jeweils mindestens eine Geräteidentifizierungskennung (DFP) für jedes für die Datenkommunikation vom Gerät (11) verwendete Datenübertragungsprotokoll und/oder für jede Portnummer und/oder für jede MAC/IP-Adresse und/oder für jedes zur Authentisierung verwendetes Zertifikat des Gerätes ermittelt wird.

9. Verfahren nach Anspruch 2, wobei der physikalische Parameter ein Stromverbrauch oder eine elektromagnetische Abstrahlung des Gerätes (11) ist.

10. Verfahren nach Ansprüche 2, wobei die Geräteidentifizierungskennung (DFP) abhängig von einem Eingabe- und Ausgabeverhalten von mindestens einem mit dem Gerät (11) verbundenen Sensor (14, 15) ermittelt wird.

11. Verfahren nach einem der vorhergehenden Ansprüche, wobei das Überprüfen durch einen Ähnlichkeitsvergleich der ermittelten Geräteidentifizierungskennung (DFP) gegenüber mindestens einer Referenz-Geräteidentifizierungskennung (RFP) durchgeführt wird.

12. Verfahren nach einem der vorhergehenden Ansprüche, wobei eine Kommunikationspartner-Identifizierungskennung des Kommunikationspartners (12, 13) ermittelt, die Kommunikationspartner-Identifizierungskennung gegenüber einer Referenz-Kommunikationspartner-Identifizierungskennung überprüft und die Ersatzfilterregel (EP) zusätzlich abhängig von dem Prüfergebnis der Kommunikationspartner-Identifizierungskennung aktiviert wird.

13. Verfahren nach einem der vorhergehenden Ansprüche, wobei die Geräteidentifizierungskennung (DFP) und/oder die Kommunikationspartner-Identifizierungskennung von der Datenfiltervorrichtung (10) an einen Server (17) gesendet und das vom Server (17) durch das Prüfen der Geräteidentifizierungskennung (DFP) ermittelte Prüfergebnis in der Datenfiltervorrichtung (10) empfangen wird.

14. Datenfiltervorrichtung zum Weiterleiten von Datenpaketen, die in einer Datenkommunikation zwischen einem Gerät und einem Kommunikationspartner ausgetauscht und von der mit dem Gerät verbundenen Datenfiltervorrichtung abhängig von mindestens einer Filterregel weitergeleitet werden, umfassend:
- eine Ermittlungseinheit (21), die derart ausgebildet ist, eine Geräteidentifizierungskennung anhand mindestens einer beobachteten statistischen Eigenschaft der Datenkommunikation und zu ermitteln,
- eine Prüfeinheit (22), die derart ausgebildet ist, die mindestens eine ermittelte Geräteidentifizierungskennung des Gerätes gegenüber mindestens einer Referenz-Geräteidentifizierungskennung überprüft, wobei ein negatives Prüfergebnis resultiert, wenn die ermittelte Geräteidentifizierungskennung von der mindestens einen Referenz-Geräteidentifizierungskennung abweicht,
- eine Aktivierungseinheit (23), die derart ausgebildet ist, mindestens eine Ersatzfilterregel in der Datenfiltervorrichtung zu aktivieren, wenn ein negatives Prüfergebnis vorliegt, und
- eine Weiterleitungseinheit (24, 25), die derart ausgebildet ist, die Datenpakete entsprechend der mindestens einen Ersatzfilterregel weiterzuleiten.

15. Datenweiterleitungsanordnung zum Weiterleiten von Datenpaketen, die in einer Datenkommunikation zwischen einem Gerät und einem Kommunikationspartner ausgetauscht und von einer mit dem Gerät verbundenen Datenfiltervorrichtung abhängig von mindestens einer Filterregel übermittelt werden, umfassend
- eine Datenfiltervorrichtung gemäß Anspruch 14 und
- einen Server, der derart ausgebildet ist, die Geräteidentifizierungskennung und/oder die Kommunikationspartner-Identifizierungskennung von der Datenfiltervorrichtung zu empfangen, die Geräteidentifizierungskennung zu prüfen und das ermittelte Prüfergebnis an die Datenfiltervorrichtung zu senden.

16. Computerprogrammprodukt, umfassend ein nichtflüchtiges Speichermedium, das direkt in einen Speicher eines digitalen Computers ladbar ist, umfassend Programmcodeteile, die dazu geeignet sind, die Schritte des Verfahrens nach einem der Ansprüche 1 bis 13 durchzuführen.
